# EUROPEAN PATENT APPLICATION

(11) **EP 4 769 741 A1**
(43) Date of publication of application: **01.07.2026**
(21) Application number: 25797689.4
(22) Date of filing: 28.04.2025
(51) Int. Cl.: H01M 50/291, H01M 50/271, H01M 50/342

(54) **BATTERY PACK**

(30) Priority: 02.05.2024 KR 20240058596
(71) Applicant: LG ENERGY SOLUTION, LTD., Seoul 07335 (KR)
(72) Inventor: Kim, Jin Hyuk, Daejeon 34122 (KR); Choi, Jong Hwa, Daejeon 34122 (KR); Lee, Jae Hyun, Daejeon 34122 (KR)
(74) Representative: Plasseraud IP
(86) International application number: PCT/KR2025/005700
(87) International publication number: WO 2025/230251

(57) **Abstract**

Embodiments provide a battery pack. The battery pack includes a pack housing with a base plate and a side wall parallel to the base plate, a lid on the side wall of the pack housing, a battery cell assembly provided on the base plate of the pack housing and including a plurality of battery cells arranged in a first direction perpendicular to a mounting surface of the base plate and an upper cover covering the plurality of battery cells, and a plurality of spacers between the lid and the upper cover, and each of the plurality of spacers is inserted into the upper cover.

## Description

### [Technical Field]

The present disclosure relates to a battery pack. The present application claims the benefit of priority based on Korean Patent Application No. 10-2024-0058596, filed on May 2, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

In a current trend toward emphasizing secondary batteries for mobility, the development of secondary battery technology is mainly aimed to reduce production costs and improve safety. A secondary battery account for a largest portion of manufacturing costs of a BEV. Therefore, a most important factor in increasing the share of BEVs compared to internal combustion engine vehicles is production costs of secondary batteries. Production costs can be reduced by reducing raw materials, reducing the number of steps in a production process, and reducing a tact time. The safety of a secondary battery is directly related to the lives of occupants of mobility and thus is very important. A main task for improving the safety of secondary batteries is to delay thermal propagation when a thermal runaway event occurs.

### [Disclosure]

### [Technical Problem]

The present disclosure is directed to providing a battery pack with improved safety.

### [Technical Solution]

Embodiments of the present disclosure provide a battery pack. The battery pack includes a pack housing with a base plate and a side wall perpendicular to the base plate, a lid on the side wall of the pack housing, a battery cell assembly provided on the base plate of the pack housing and including a plurality of battery cells arranged in a first direction parallel to a mounting surface of the base plate and an upper cover covering the plurality of battery cells, and a plurality of spacers between the lid and the upper cover, and each of the plurality of spacers is inserted into the upper cover.

Each of the plurality of spacers may include a body having a quadrangular column shape extending in a second direction perpendicular to the first direction, and a first tongue protruding from the body toward the upper cover.

The upper cover may include a plurality of grooves overlapping the plurality of spacers.

The first tongues of the plurality of spacers may be inserted into the plurality of grooves.

Each of the plurality of spacers may include a second tongue protruding from the body toward the lid.

The lid may include a plurality of grooves overlapping the plurality of spacers.

The second tongues of the plurality of spacers may be inserted into the plurality of grooves.

Each of the plurality of spacers may have a cylindrical shape.

The plurality of spacers may be interposed between the lid and the upper cover.

The plurality of spacers may be in contact with the lid and the upper cover.

The plurality of spacers may be arranged in a second direction perpendicular to the first direction and parallel to the mounting surface.

A length of each of the plurality of spacers in the second direction may be less than a length of each of the plurality of battery cells in the second direction.

The upper cover may include a plurality of exhaust holes, and the plurality of spacers may be interposed between the plurality of exhaust holes in the first direction.

A length of each of the plurality of spacers in the first direction may be less than a distance between neighboring ones of the plurality of exhaust holes in the first direction.

Each of the plurality of spacers may be solid.

Each of the plurality of spacers may be hollow.

### [Advantageous Effects]

A battery pack according to embodiments of the present disclosure includes a plurality of spacers between a lid and an upper cover. Accordingly, even when the upper cover on a plurality of battery cell assemblies deforms in a thermal runaway event, an exhaust path between the lid and the upper cover can be ensured, and the safety of the battery pack can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view for describing a battery pack according to embodiments.
FIG. 2 is a cross-sectional view taken along line 1I-1I' of FIG. 1.
FIG. 3 is a perspective view of a spacer according to embodiments.
FIG. 4 is a cross-sectional view for describing a battery pack according to other embodiments.
FIG. 5 is a perspective view of a spacer according to embodiments.
FIG. 6 is a cross-sectional view for describing a battery pack according to other embodiments.
FIG. 7 is a perspective view of a spacer according to embodiments.
FIG. 8 is a cross-sectional view for describing a battery pack according to other embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

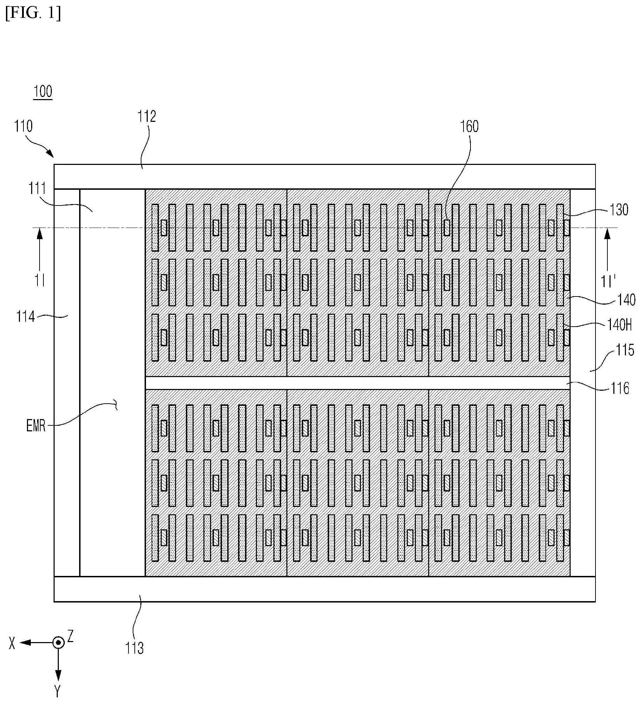

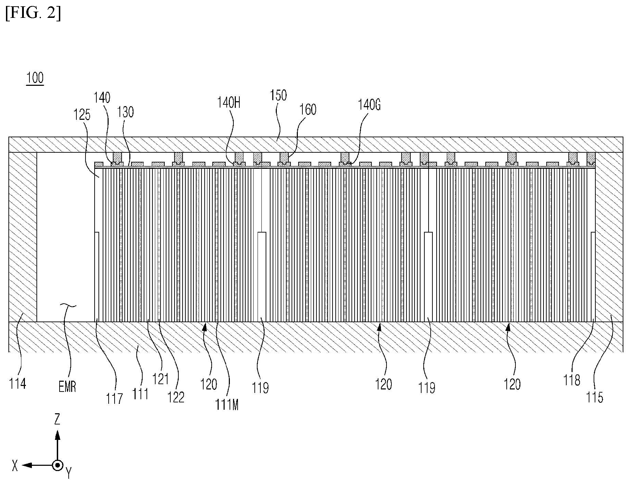

FIG. 1 is a plan view for describing a battery pack 100 according to embodiments. For more complete understanding of an arrangement of elements of the battery pack 100, a lid 150 (see FIG. 2) is omitted in FIG. 1.

FIG. 2 is a cross-sectional view taken along line 1I-1I' of FIG. 1.

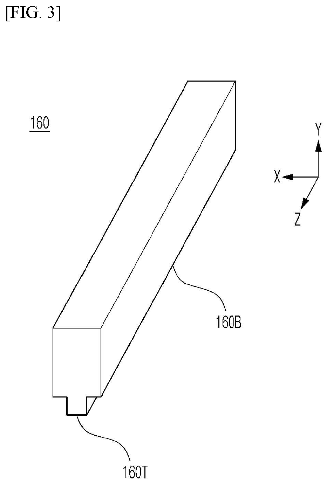

FIG. 3 is a perspective view of a spacer 160 according to embodiments.

Referring to FIGS. 1 and 2, the battery pack 100 may include a pack housing 110, a plurality of battery cell assemblies 120, a plurality of fire-resistant sheets 130, a plurality of upper covers 140, a lid 150, and a plurality of spacers 160. The battery pack 100 is a final form of a battery system to be mounted in a mobility or the like.

The pack housing 110 may provide a space for arranging the plurality of battery cell assemblies 120 therein. The pack housing 110 may include a base plate 111, side walls 112, 113, 114, and 115, a center beam 116, and supporting beams 117, 118 and 119.

Two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

Each of the base plate 111 and the side walls 112 and 113 may be provided by an extrusion process. An extrusion direction of each of the base plate 111 and the side walls 112 and 113 may be the X-axis direction. That is, a YZ cross-section of each of the base plate 111 and the side walls 112 and 113 may be constant according to a position in the X-axis direction except for deformation due to additional tooling. Here, the YZ cross-section may be substantially parallel to the Y-axis direction and the Z-axis direction and be substantially perpendicular to the X-axis direction. The base plate 111 and the side walls 112 and 113 may be arranged in the Y-axis direction. The side walls 114 and 115 may also be provided by the extrusion process.

According to embodiments, the base plate 111 and the side walls 112 and 113 may be coupled by friction stir welding. The base plate 111 may include a plurality of unit plates coupled to each other by friction stir welding.

The center beam 116 may extend in the X-axis direction. The center beam 116 may be interposed between the side walls 112 and 113. The center beam 116 may be included in a center plate on a midpoint between the plurality of unit plates coupled together by friction stir welding. Accordingly, the center beam 116 may be formed together with the center plate in the extrusion process and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120.

Each of the plurality of battery cell assemblies 120 may include a plurality of battery cells 121, a plurality of pads 122, and side beams 125. Each of the plurality of battery cells 121 may be a lithium ion battery. Each of the plurality of battery cells 121 includes an electrode assembly, an electrolyte, and a case. Each of the plurality of battery cells 121 may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series. The number of banks connected in series and the number of battery cells 121 included in the plurality of banks may be determined according to a voltage and a current to be output from each of the battery cell assemblies 120.

The plurality of pads 122 may be interposed between the plurality of battery cells 121. The plurality of pads 122 may horizontally press the plurality of battery cells 121 and prevent or alleviate the swelling of the plurality of battery cells 121. The plurality of pads 122 may isolate the plurality of battery cells 121 from each other. According to embodiments, each of the plurality of battery cells 121 may include polyurethane (PU). According to embodiments, each of the plurality of battery cells 121 may include a fire-resistant material such as silicone.

According to embodiments, each of the plurality of pads 122 and two banks may be alternately arranged. According to embodiments, two of the plurality of banks may be interposed between neighboring pads 122. According to other embodiments, only one bank or three or more banks may be interposed between neighboring pads 122.

The side beams 125 may be spaced apart from each other with the plurality of battery cells 121 therebetween. The side beams 125 may cover the plurality of battery cells 121. The side beams 125 may horizontally support the plurality of battery cells 121. The side beams 125 may be fixed to the plurality of battery cells 121 via an adhesive material or the like.

According to embodiments, the side beams 125 may have the same shape. According to embodiments, the side beams 125 may be symmetrically arranged. The side beams 125 may be coupled to a corresponding one of the supporting beams 117, 118, and 119. The side beams 125 may be fastened to the corresponding one of the supporting beams 117, 118 and 119 through a mechanical method such as bolting.

The supporting beams 117, 118 and 119 may extend in the Y-axis direction. The supporting beams 117, 118 and 119 may be welded to the base plate 111. The supporting beams 118 may be interposed between the supporting beams 117 and 119. Accordingly, the battery cell assemblies 120 may be interposed between the supporting beams 117 and 118, between the supporting beams 118, and between the supporting beams 118 and 119.

Each of the plurality of battery cell assemblies 120 may further include an integrated circuit assembly. The integrated circuit assembly may include an insulating frame, an integrated circuit, bus bars, sensing plates, sensing bars, temperature sensors, wires, and an insulating cover.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited to positive electrode leads of one or more battery cells 121 of a first bank and negative electrode leads of one or more battery cells 121 of a last bank. The bus bars may be welded to the positive electrode leads of the one or more battery cells 121 of the first bank and the negative electrode leads of the one or more battery cells 121 of the last bank. Resulting voltages of the plurality of battery cells 121 of each of the plurality of battery cell assemblies 120 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes.

The sensing bars may include a conductive material. The sensing bars may have a rod shape. The sensing bars may be short-circuited to the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited to corresponding ones of the positive electrode leads and the negative electrode leads of the plurality of battery cells 121.

Each of the sensing plates may be connected to the integrated circuit. Voltages of a plurality of nodes of each of the plurality of battery cell assemblies 120 may be measured through the sensing plates.

The temperature sensors may be configured to measure temperatures at a plurality of points on the battery cell assembly 120. The temperature sensors may be arranged in the X-axis direction, the Y-axis direction, and the Z-axis direction and thus a temperature distribution in the battery cell assembly 120 may be monitored.

The center beam 116 may extend in the X-axis direction. The center beam 116 may overlap a central area of the base plate. The center beam 116 may isolate the battery cell assemblies 120 in the Y-axis direction. The center beam 116 may be interposed between the battery cell assemblies 120.

In the present example, the plurality of battery cell assemblies 120 are arranged in two rows and three columns. Accordingly, it may be understood that the plurality of battery cell assemblies 120 are arranged in a 3x2 array. A battery pack including the plurality of battery cell assemblies 120 arranged in an MxN array would be easily derived by those of ordinary skill in the art, based on the above description. Here, M and N are each an integer of 2 or more.

The plurality of fire-resistant sheets 130 may be on the plurality of battery cell assemblies 120. The plurality of upper covers 140 may be on the plurality of fire-resistant sheets 130. The plurality of upper covers 140 may cover the plurality of battery cell assemblies 120. The plurality of fire-resistant sheets 130 may be interposed between the plurality of upper covers 140 and the plurality of battery cell assemblies 120.

The plurality of fire-resistant sheets 130 may correspond to the plurality of battery cell assemblies 120 in a one-to-one fashion but embodiments are not limited thereto. Two or more of the fire-resistant sheets 130 may cover one of the plurality of battery cell assemblies 120 or one of the fire-resistant sheets 130 may cover two or more of the plurality of battery cell assemblies 120.

Each of the plurality of upper covers 140 may include an insulating material. For example, each of the plurality of upper covers 140 may include fire-resistant plastic. According to other embodiments, each of the plurality of upper covers 140 may include a metal such as aluminum and stainless steel.

The plurality of upper covers 140 may overlap the plurality of battery cell assemblies 120 in the Z-axis direction. The plurality of upper covers 140 may be substantially parallel to the mounting surface 111M of the base plate 111. The plurality of upper covers 140 may be substantially perpendicular to the Z-axis direction.

The plurality of upper covers 140 may be interposed between the plurality of battery cell assemblies 120 and the lid assembly 150. The plurality of upper covers 140 may be spaced apart from the lid assembly 150 in the Z-axis direction. A space between the plurality of upper covers 140 and the lid assembly 150 may be an exhaust passage.

Each of the plurality of upper covers 140 may include a plurality of exhaust holes 140H exposing portions of a corresponding one of the plurality of fire-resistant sheets 130. The plurality of exhaust holes 140H may overlap the plurality of battery cells 121 in the Z-axis direction.

Each of the plurality of exhaust holes 140H may have a rectangular shape. Corners of each of the plurality of exhaust holes 140H may have a round shape but are not limited thereto. A length of each of the plurality of exhaust holes 140H in the X-axis direction may be different from a length of each of the plurality of exhaust holes 140H in the Y-axis direction. The length of each of the plurality of exhaust holes 140H in the X-axis direction may be less than the length of each of the plurality of exhaust holes 140H in the Y-axis direction.

The length of each of the plurality of exhaust holes 140H in the Y-axis direction may be different from a length of each of the plurality of battery cells 121 in the Y-axis direction. The length of each of the plurality of exhaust holes 140H in the Y-axis direction may be less than the length of each of the plurality of battery cells 121 in the Y-axis direction. Accordingly, each of the plurality of battery cells 121 may overlap two or more (e.g., three) exhaust holes 140H in the Z-axis direction.

A length of each of the plurality of exhaust holes 140H in the X-axis direction may be different from a length of each of the plurality of battery cells 121 in the X-axis direction. The length of each of the plurality of exhaust holes 140H in the X-axis direction may be greater than the length of each of the plurality of battery cells 121 in the X-axis direction. Accordingly, the plurality of exhaust holes 140H may overlap portions of two or more battery cells 121 in the Z-axis direction.

Each of the plurality of fire-resistant sheets 130 may include a fire-resistant material, for example, mica. Each of the plurality of fire-resistant sheets 130 may have low thermal conductivity and a high ignition point.

Each of the plurality of fire-resistant sheets 130 may include a plurality of opening guides overlapping the plurality of exhaust holes 140H. Each of the plurality of opening guides may have relatively low physical strength. The plurality of open guides may be provided by mechanically tooling portions of the plurality of fire-resistant sheets 130 to be broken. When a thermal runaway event occurs in one of the plurality of battery cell assemblies 120, the plurality of opening guides overlapping the plurality of exhaust holes 140H may be easily broken and thus an exhaust path of a high-temperature gas through the plurality of exhaust holes 140H may be provided.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The plurality of upper covers 140 may include a plurality of grooves 140G. The plurality of grooves 140G may be in upper surfaces of the plurality of upper covers 140 (i.e., surfaces thereof facing the lid 150) . Each of the plurality of grooves 140G may extend in the Y-axis direction. A depth of each of the plurality of grooves 140G may be in a range of about 30% to about 70% of a thickness of each of the plurality of upper covers 140 in the Z-axis direction.

The lid 150 may be coupled to the side walls 112, 113, 114 and 115. The lid 150 may be fixed to the side walls 112, 113, 114 and 115 by a mechanical means such as a bolt. The lid 150 may cover elements, such as the battery cell assemblies 120 and electronic components, inside the battery pack 100. A gasket may be interposed between the lid 150 and the side walls 112, 113, 114 and 115. The gasket may provide a liquid seal to the battery pack 100.

The lid 150 may be provided through, for example, a casting process. The lid 150 may have an approximately flat plate shape and include irregularities for enhancing impact resistance and vibration resistance. The irregularities of the lid 150 may be used as a guide for communication within the battery pack 100.

The plurality of spacers 160 may be in contact with a corresponding one of the lid 150 and the upper covers 140. The plurality of spacers 160 may be arranged in a matrix. The plurality of spacers 160 may be arranged in the X-axis direction.

The plurality of spacers 160 may be on a center portion of a corresponding one of the plurality of upper covers 140 in the X-axis direction. Some of the plurality of spacers 160 may be on an edge of a corresponding one of the plurality of upper covers 140 in the X-axis direction. Some of the plurality of spacers 160 may overlap the side beams 125 in the Z-axis direction and thus thermal propagation between neighboring battery cell assemblies 120 in the X-axis direction may be mitigated.

Each of the plurality of spacers 160 may include a body 160B having an approximately quadrangular column shape and a tongue 160T protruding from the body 160B. The tongue 160T of each of the plurality of spacers 160 may protrude toward the plurality of upper covers 140. The tongue 160T of each of the plurality of spacers 160 may extend in the Y-axis direction. Each of the plurality of spacers 160 may be solid.

The plurality of spacers 160 may be inserted into the plurality of upper covers 140. The plurality of spacers 160 may be partially inserted into the plurality of upper covers 140. The tongue 160T of each of the plurality of spacers 160 may be inserted into a corresponding one of the plurality of grooves 140G. The tongues 160T of the plurality of spacers 160 and the plurality of grooves 140G may have complementary shapes. A height of the tongue 160T of each of the plurality of spacers 160 and a depth of the corresponding one of the plurality of grooves 140G may be substantially the same but embodiments are not limited thereto.

The plurality of spacers 160 may be arranged in the Y-axis direction. A length of each of the plurality of spacers 160 in the Y-axis direction may be different from a length of each of the plurality of spacers 160 in the X-axis direction. The length of each of the plurality of spacers 160 in the Y-axis direction may be greater than the length of each of the plurality of spacers 160 in the X-axis direction. The length of each of the plurality of spacers 160 in the Y-axis direction may be different from a length of each of the plurality of spacers 160 in the Z-axis direction. The length of each of the plurality of spacers 160 in the Y-axis direction may be greater than the length of each of the plurality of spacers 160 in the Z-axis direction.

The length of each of the plurality of spacers 160 in the Y-axis direction may be different from the length of each of the plurality of battery cells 121 in the Y-axis direction. The length of each of the plurality of spacers 160 in the Y-axis direction may be less than the length of each of the plurality of battery cells 121 in the Y-axis direction, and thus, in the present example, some battery cells 121 may overlap the three spacers 150S in the Z-axis direction. According to embodiments, spacers 150S arranged in the Y-axis direction may be spaced apart from each other and there may be an empty space therebetween, thereby prevent the exhaust path from being blocked by the plurality of spacers 160.

According to embodiments, the length of each of the plurality of spacers 160 in the Z-axis direction may be substantially the same as a distance between the lid 150 and the upper cover 140 in the Z-axis direction. According to embodiments, each of the plurality of spacers 160 may be in contact with each of the lid 150 and the upper covers 140.

Each of the plurality of spacers 160 may be staggered with the exhaust holes 140H of the upper covers 140. Each of the plurality of spacers 160 may not overlap the exhaust holes 140H of the upper covers 140 in the Z-axis direction and thus the exhaust efficiency of the battery pack 100 may be high. Each of the plurality of spacers 160 may be interposed between neighboring ones of the exhaust holes 140H of the upper covers 140. Each of the plurality of spacers 160 may not cover the exhaust holes 140H. A length of each of the plurality of spacers 160 in the X-axis direction may be different from a distance between neighboring ones of the plurality of exhaust holes 140H in the X-axis direction. The length of each of the plurality of spacers 160 in the X-axis direction may be less than the distance between neighboring ones of the plurality of exhaust holes 140H in the X-axis direction.

Each of the plurality of spacers 160 may cause a gap between the upper cover 140 and the lid 150 to be maintained in a thermal runaway event. Accordingly, the exhaust path of the battery pack 100 may be prevented from being blocked due to deformation of the upper cover 140 in the thermal runaway event, and the safety of the battery pack 100 may be improved.

The battery pack 100 may further include electronic components. The electronic components may include an electronic device required to drive the battery pack. The electronic components may be on an electronic component mounting region EMR. The electronic component mounting region EMR may be a space between the side wall 114 and the supporting beam 117.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of exhaust devices. The plurality of exhaust devices may be installed on one of the lid assembly 150 and the side walls 112, 113, 114, and 115. The plurality of exhaust devices may provide a path for discharging a high-temperature gas from the inside of the battery pack 100 to the outside when the thermal runaway event occurs in some of the plurality of battery cell assemblies 120. Accordingly, thermal propagation may be delayed, and the stability of the battery pack 100 may be improved.

### (Second embodiment)

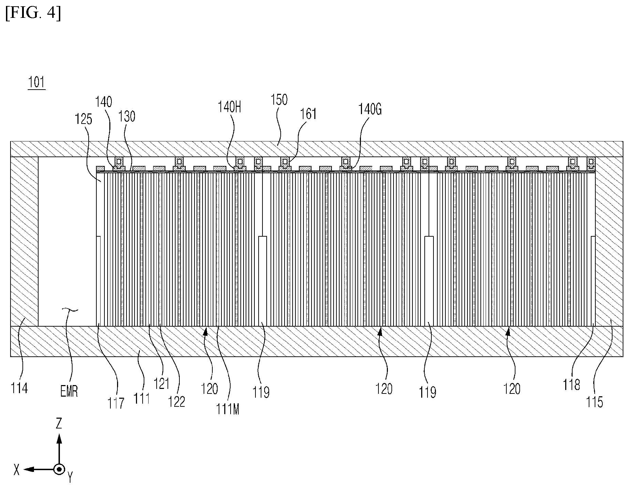

FIG. 4 is a cross-sectional view for describing a battery pack 101 according to other embodiments.

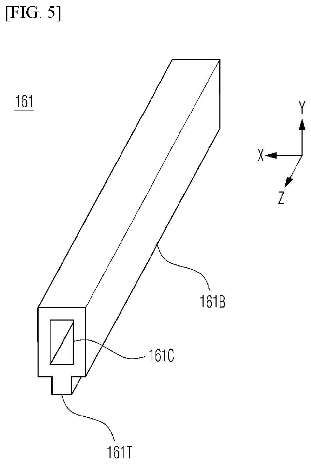

FIG. 5 is a perspective view of a spacer 161 according to embodiments.

Referring to FIGS. 4 and 5, the battery pack 100 may include a pack housing 110, a plurality of battery cell assemblies 120, a plurality of fire-resistant sheets 130, a plurality of upper covers 140, a lid 150, and a plurality of spacers 161. The battery pack 101 is a final form of a battery system to be mounted in a mobility or the like.

The pack housing 110, the plurality of battery cell assemblies 120, the plurality of fire-resistant sheets 130, the plurality of upper covers 140, and the lid 150 are substantially the same as those described above with reference to FIGS. 1 to 3 and thus redundant description thereof is omitted here.

According to embodiments, the plurality of spacers 161 may include a cavity 161C extending in the Y-axis direction. The plurality of spacers 161 are substantially the same as the plurality of spacers 160 of FIG. 2, except that the plurality of spacers 161 are hollow. According to embodiments, the battery pack 101 includes the plurality of spacers 161 that are hollow, thus improving the energy density of the battery pack 101.

### (Third Embodiment)

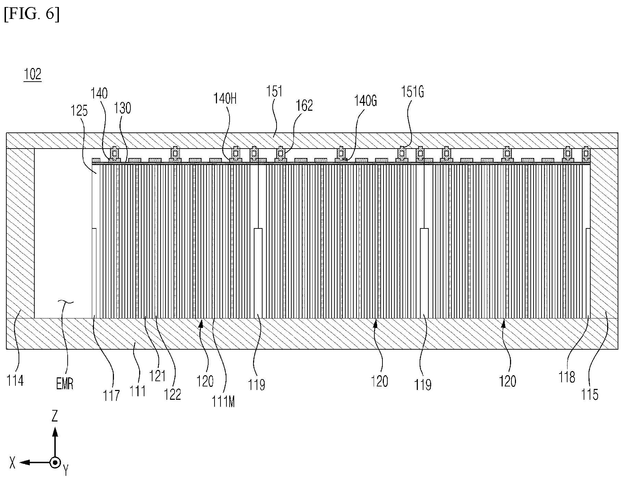

FIG. 6 is a cross-sectional view for describing a battery pack 102 according to other embodiments.

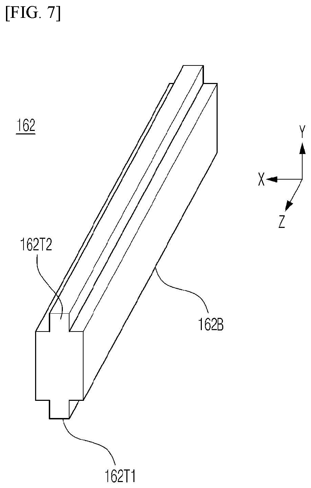

FIG. 7 is a perspective view of a spacer 162 according to embodiments.

Referring to FIGS. 6 and 7, the battery pack 102 may include a pack housing 110, a plurality of battery cell assemblies 120, a plurality of fire-resistant sheets 130, a plurality of upper covers 140, a lid 151, and a plurality of spacers 162. The battery pack 101 is a final form of a battery system to be mounted in a mobility or the like.

The pack housing 110, the plurality of battery cell assemblies 120, the plurality of fire-resistant sheets 130, and the plurality of upper covers 140 are substantially the same as those described above with reference to FIGS. 1 to 3 and thus redundant description thereof is omitted here.

The lid 151 may include a plurality of grooves 151G. The plurality of grooves 151G may be on a bottom surface of the lid 151 (i.e., a surface of the lid 151 facing the plurality of upper covers 140. Each of the plurality of grooves 151G may extend in the Y-axis direction. The lid 151 is substantially the same as the lid 150 of FIG. 2, except that the lid 151 includes the plurality of grooves 151G.

Each of the plurality of spacers 162 may include a body 162B having an approximately quadrangular column shape and first and second tongues 162T1 and 162T2 protruding from the body 162B. The body 162B and the first tongue 162T1 are substantially the same as the body 160B and the tongue 160T of FIG. 3.

The second tongue 162T2 of each of the plurality of spacers 162 may protrude toward the lid 151. The second tongue 162T2 of each of the plurality of spacers 162 may extend in the Y-axis direction.

The plurality of spacers 162 may be inserted into the lid 151. The plurality of spacers 162 may be partially inserted into the lid 151. The second tongue 162T2 of each of the plurality of spacers 162 may be inserted into a corresponding one of the plurality of grooves 151G. The second tongues 162T2 of the plurality of spacers 162 and the plurality of grooves 151G may have complementary shapes. A height of the second tongue 162T2 of each of the plurality of spacers 162 and a depth of the corresponding one of the plurality of grooves 151G may be substantially the same but embodiments are not limited thereto.

### (Fourth Embodiment)

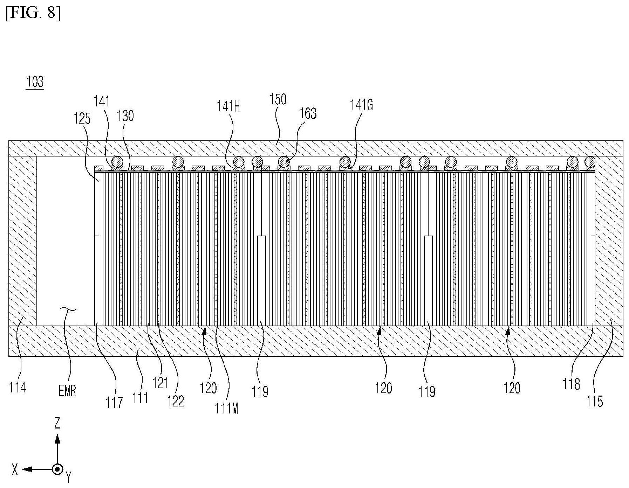

FIG. 8 is a cross-sectional view for describing a battery pack 103 according to other embodiments.

Referring to FIG. 8, the battery pack 103 may include a pack housing 110, a plurality of battery cell assemblies 120, a plurality of fire-resistant sheets 130, a plurality of upper covers 141, a lid 150, and a plurality of spacers 163. The battery pack 101 is a final form of a battery system to be mounted in a mobility or the like.

The pack housing 110, the plurality of battery cell assemblies 120, the plurality of fire-resistant sheets 130, and the lid 150 are substantially the same as those described above with reference to FIGS. 1 to 3 and thus redundant description thereof is omitted here.

In the present example, each of the plurality of spacers 163 may have a cylindrical rod shape. According to embodiments, the plurality of spacers 163 may not include a tongue. The above description of the dimensions and arrangement of the plurality of spacers 160 (see FIG. 2) may apply to the plurality of spacers 163 except for a cross-sectional shape.

The plurality of upper covers 141 may include a plurality of grooves 141G having a round shape. The plurality of grooves 141G may have a shape complementary to the plurality of spacers 163. The plurality of spacers 163 may be partially inserted into the plurality of grooves 141G.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing with a base plate and a side wall perpendicular to the base plate;
a lid on the side wall of the pack housing;
a battery cell assembly on the base plate of the pack housing, the battery cell assembly including a plurality of battery cells arranged in a first direction parallel to a mounting surface of the base plate and an upper cover covering the plurality of battery cells; and
a plurality of spacers between the lid and the upper cover,
wherein each of the plurality of spacers is inserted into the upper cover.

2. The battery pack of claim 1, wherein each of the plurality of spacers includes a body having a quadrangular column shape extending in a second direction perpendicular to the first direction, and a first tongue protruding from the body toward the upper cover.

3. The battery pack of claim 2, wherein the upper cover includes a plurality of grooves overlapping the plurality of spacers.

4. The battery pack of claim 3, wherein the first tongues of the plurality of spacers are inserted into the plurality of grooves.

5. The battery pack of claim 2, wherein each of the plurality of spacers includes a second tongue protruding from the body toward the lid.

6. The battery pack of claim 5, wherein the lid includes a plurality of grooves overlapping the plurality of spacers.

7. The battery pack of claim 6, wherein the second tongues of the plurality of spacers are inserted into the plurality of grooves.

8. The battery pack of claim 1, wherein each of the plurality of spacers has a cylindrical shape.

9. The battery pack of claim 1, wherein the plurality of spacers are interposed between the lid and the upper cover.

10. The battery pack of claim 1, wherein the plurality of spacers are in contact with the lid and the upper cover.

11. The battery pack of claim 1, wherein the plurality of spacers are arranged in a second direction perpendicular to the first direction and parallel to the mounting surface.

12. The battery pack of claim 11, wherein a length of each of the plurality of spacers in the second direction is less than a length of each of the plurality of battery cells in the second direction.

13. The battery pack of claim 1, wherein the upper cover includes a plurality of exhaust holes, and
the plurality of spacers are interposed between the plurality of exhaust holes in the first direction.

14. The battery pack of claim 13, wherein a length of each of the plurality of spacers in the first direction is less than a distance between neighboring ones of the plurality of exhaust holes in the first direction.

15. The battery pack of claim 1, wherein each of the plurality of spacers is solid.

16. The battery pack of claim 1, wherein each of the plurality of spacers is hollow.
